# EUROPEAN PATENT SPECIFICATION

(11) **EP 2 461 116 B1**
(45) Date of publication and mention of the grant of the patent: **11.06.2014**
(21) Application number: 10806085.6
(22) Date of filing: 26.07.2010
(51) Int. Cl.: B65D 85/30, B65D 85/48

(54) **RACK FOR SAFE TRANSPORTATION OF CONCENTRATION SOLAR PANELS**
GESTELL FÜR SICHEREN TRANSPORT VON SOLARKONZENTRATIONSTAFELN
CRÉMAILLÈRE POUR LE TRANSPORT EN TOUTE SÉCURITÉ DE FACETTES SOLAIRES DE CONCENTRATION

(30) Priority: 28.07.2009 ES 200930522
(43) Date of publication of application: 06.06.2012
(73) Proprietor: Abengoa Solar New Technologies, S.A., 41018 Sevilla (ES)
(72) Inventor: CERÓN GARCÍA, Francisco, E-41018 Sevilla (ES); CORNAGO RAMÍREZ, Emiliano, E-41018 Sevilla (ES)
(74) Representative: Pons Ariño, Angel
(86) International application number: PCT/ES2010/070517
(87) International publication number: WO 2011/015700

(56) References cited:
- WO-A1-2008/041711
- CA-A1- 2 552 269
- DE-B1- 1 511 997
- JP-A- 2000 079 961
- JP-A- 2000 191 067
- JP-U- 3 121 018
- US-A- 5 641 076
- DATABASE WPI Derwent Publications Ltd., London, GB; AN 2009-G26777, XP008151385 & DE 20 2008 011823 U1 (BACHMANN EBERHARD) 19 February 2009

## Description

### OBJECT OF THE INVENTION

The present invention falls within the field of solar energy.

The object of the patent consists of a rack for transporting solar mirror facets which is adapted for protecting said mirror facets from impacts and vibrations during transportation thereof.

### BACKGROUND OF THE INVENTION

The mirror facets used in installations of solar concentration mirrors have a side equipped with a mirror. Due to the fragility of the mirror, every precaution must be taken when transporting said mirror facets in order to avoid damage to said mirror.

To date, solid wood cases closed by side panels and custom-made according to the size of the mirror facets have been used in an attempt to protect said facets from impacts and vibrations during transport thereof. However, this solution has the drawback that the rigidity of the wooden case does not provide sufficient protection against impacts and vibrations. Additionally, the mirror facets, transported in the previously described manner, come into contact with the panels, wherefore the risk of breakage is not eliminated. As a result of said drawbacks, approximately 30% of the transported facets are broken during transport thereof. Metal transportation racks are also known. JP 3121018U discloses a rack for glass plates.

### DESCRIPTION OF THE INVENTION

The present invention overcomes the aforementioned drawbacks by providing a rack for the secure transportation of solar concentration facets which prevents the mirror from coming into contact with any bodies that could damage said mirror, in addition to keeping the facets fixed to the rack, with the absence of spaces that could cause the facets to strike against the rack due to vibrations and jolts.

The rack of the invention has a frame formed by a parallelepiped structure composed of bars, wherein said bars define an inner face, an upper face and four lateral faces.

Facets are rectangular structures wherein a larger side and smaller side can be observed. Once the facets are inside the rack of the invention, said facets will be disposed parallel to two of the frame faces, called main sides, the inner dimensions of which are substantially identical (except for small spaces) to the dimensions of the larger sides and smaller sides of the facets.

The facets are introduced in the interior of the frame through a face called load face and in a direction called load direction, which corresponds to the direction which is perpendicular to the load face.

The invention envisages that the facets can be disposed in the interior of the frame arranged horizontally (substantially parallel to the ground) or, alternatively, arranged vertically (substantially perpendicular to the ground). To this end, two preferred embodiments will be presented, wherein the frame of each is adapted to one of the aforementioned arrangements.

The load face can be any of the sides other than the main sides; however, in the case of vertical arrangement, the load face is preferably the upper side, while in the case of horizontal arrangement of the facets, the load face is preferably the lateral face, the dimensions of which are substantially identical to that of the smaller sides of the facets.

At least one support (preferably two supports) that serve as a butt to stop the facets as they move along the load direction, are disposed on the face opposite the load face in the interior of the frame. Preferably, said supports comprise at least one bar or one open profile (preferably two bars or two open profiles).

The frame comprises dividers within that divide the interior of the frame into cavities adapted to house the facets. The dividers are preferably formed by flat bar structures fixed to the supports, preferably screwed to the supports, which define cavities wherein the facets are housed. The dividers can be outer dividers (those which are nearest the main faces) and inner dividers (the rest).

The amplitude of the cavities defined by the dividers is such as to allow easy insertion and removal of the facets, but not such as to allow spaces susceptible of causing damage to the facets during transportation thereof.

The outer dividers are joined to the load face by first joining means. Preferably, the first joining means are angle brackets screwed to the outer dividers and to at least one of the bars of the load face. Likewise, the inner dividers are joined to at least one adjacent divider by means of second joining means, which are preferably anchoring strips screwed to an inner divider and to at least one adjacent divider.

Movement of the facets in the interior of the frame is restricted along the load direction by the supports and angle brackets/strips, as well as along a direction perpendicular to the load face by means of the dividers.

According to a preferred embodiment of the invention, pads made of elastic or plastic material are disposed between the outer strips or angle brackets and the dividers for the purpose of absorbing minor deformations.

The faces other than the main faces may have sealing means to prevent the facets disposed in the interior of the rack to accidentally abandon said rack. The sealing means may be both fixed and removable, although they are preferably fixed and comprise corresponding bars or profiles disposed on two opposite faces. The faces where the sealing means are located are called sealing faces and correspond to different faces, depending on whether the facets are arranged horizontally or vertically

In the rack of the invention, the mirror facets are not in contact with any bodies. Additionally, the dividers are joined together, minimising the risk of impacts and vibrations. Finally, the sealing means provide an additional safety element, securing the position of the facets in the interior of the frame in case of failure. It is observed that the invention provides complementary restrictions to the movement of the facets within the frame that reasonably guarantee the integrity of said facets in the event of vibrations, potholes, blows, etc. during transportation thereof.

### DESCRIPTION OF THE DRAWINGS

In order to complete the description being made and with the object of helping to better understand the characteristics of the invention, in accordance with a preferred example of practical embodiment thereof, accompanying said description as an integral part thereof, is a set of drawings wherein the following has been represented in an illustrative and non-limiting manner:
Figure 1. Shows a perspective view of the empty rack in the case of vertical arrangement of the facets.
Figure 2. Shows a side view of the vertical arrangement of the facets in the interior of the frame.
Figure 3. Shows a detailed side view of the joint between the strips/angle brackets and the dividers.
Figure 4. Shows a perspective view of the empty rack in the case of horizontal arrangement of the facets.
Figure 5. Shows a side view of the vertical arrangement of the facets in the interior of the frame.

### PREFERRED EMBODIMENT OF THE INVENTION

### FIRST EMBODIMENT: VERTICAL ARRANGEMENT OF THE FACETS

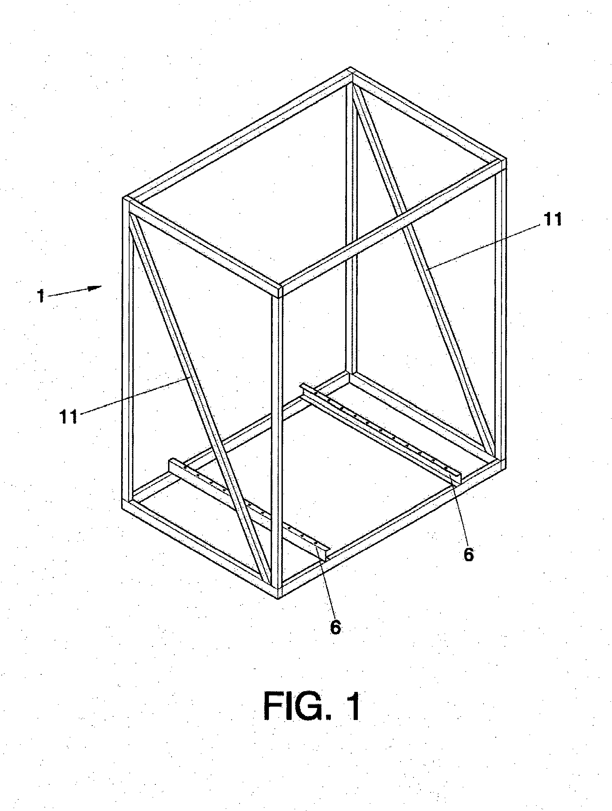

In figure 1 it can be seen that the rack of the invention has a parallelepiped frame (1) composed of steel bars that define a lower face, an upper face and lateral faces. In the first preferred embodiment, the load face (the face where through the facets (7) are inserted in the rack) is the upper face. The facets (7) are rectangular structures wherein a larger side and a smaller side can be observed. The facets (7) are disposed in the interior of the rack according to the invention, parallel to two of the lateral faces of the frame, called main faces, the inner dimensions of which are substantially identical (except for small spaces) to the dimensions of the larger sides and smaller sides of the facets (7).

Likewise, in figure 1 it can be seen that the frame (1) includes two supports (6) in the form of U-shaped profiles fixed to the face opposite the load face. Said supports (6) act as a butt to stop the facets (7) as they move along the load direction, which is the direction perpendicular to the load face.

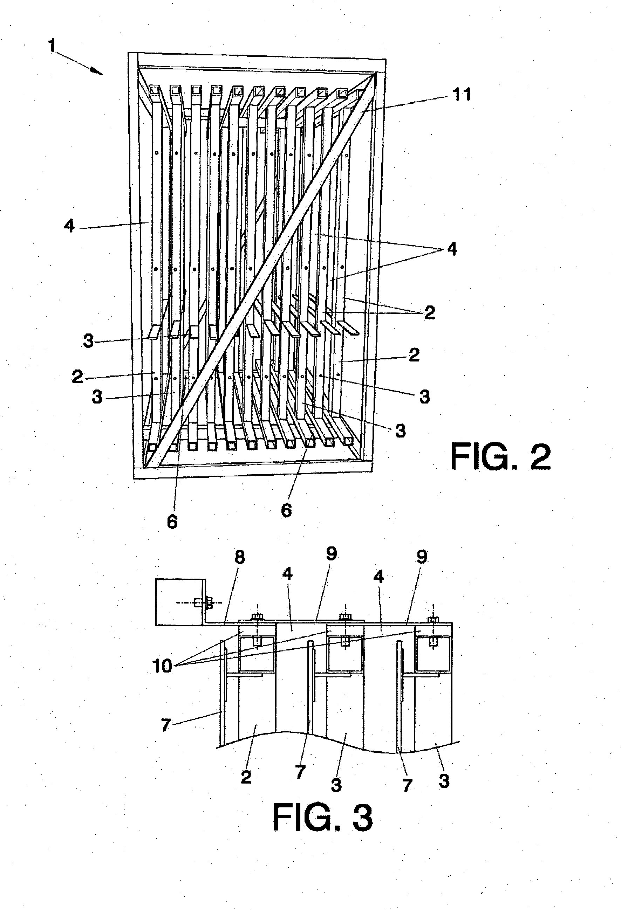

In figure 2 it can be seen that the frame (1) comprises dividers (2, 3) in its interior formed by flat bar structures which are screwed to the supports (6), defining cavities (4) wherein the facets (7) are housed. The dividers (2, 3) can be outer dividers (2) and inner dividers (3)

As can be observed in figure 2, the facets (7) are introduced in the frame (1) through the upper face, said facets (7) resting upon the supports (6).

Figure 3 shows screwed angle brackets (8) that join each of the outer dividers (2) to at least one of the bars of the load face. Screwable strips (9) are used to join the inner dividers (3) to at least one adjacent divider (2, 3).

Pads (10) made of elastic or plastic material are disposed between the strips (9) or angle brackets (8) and the dividers (2, 3) for the purpose of absorbing small deformations.

The sealing faces, i.e. lateral faces other than the main faces, have sealing means (11) formed by bars or closed profiles disposed between vertices opposite said sealing faces, for the purpose of securing the position of the facets (7) in the case of an eventual failure in the joints between any of the facets (7) and the supports (6) or other facets (7), preventing the facets (7) from abandoning the frame (1) by means of said sealing faces.

### SECOND EMBODIMENT: HORIZONTAL ARRANGEMENT OF THE FACETS

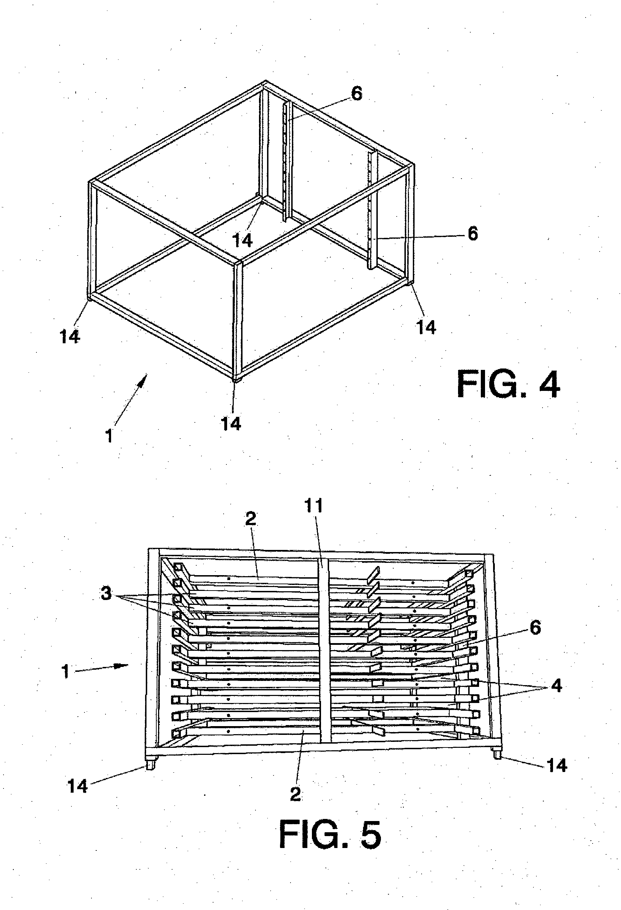

In figure 4 it can be observed that the rack according to the invention has a parallelepiped frame (1) composed of steel bars that define a lower face, an upper face and lateral faces. The facets (7) are rectangular structures wherein a larger side and smaller side can be observed. The facets (7) are disposed in the interior of the rack of the invention parallel to two of the lateral faces of the frame, called main faces, the inner dimensions of which are substantially identical (except for small spaces) to the dimensions of the larger sides and smaller sides of the facets. In the second preferred embodiment, the load face is one of the lateral faces other than the main faces.

Likewise, it can be observed in figure 4 that the frame (1) incorporates two supports (6) in the form of a U-shaped profile to the face opposite the load face. Said supports (6) act as a butt to stop the facets (7) as they move along the load direction, which is the direction perpendicular to the load face.

In figure 5 it can be seen that the frame (1) comprises dividers (2, 3) in its interior, formed by flat bar structures, which are screwed to the supports (6), defining cavities (4) wherein the facets (7) are housed. As can be observed in figure 5, the dividers can be outer dividers (2) and inner dividers (3).

As can be observed in figure 5, the facets (7) are introduced into the frame (1) through one of the lateral faces other than the main faces, said facets (7) resting upon the supports (6).

Figure 3 shows screwed angle brackets (8) that join each of the outer dividers (2) to at least one of the bars of the load face. Screwable strips (9) are used to join the inner dividers (3) to at least one adjacent divider (2, 3).

Pads (10) made of elastic or plastic material are disposed between the strips (9) or angle brackets (8) and the dividers (2, 3) for the purpose of absorbing small deformations.

The sealing faces, i.e. lateral faces other than the load faces, have sealing means (11) formed by bars or closed profiles disposed vertically in the interior of the sealing face. The sealing means (11) secure the position of the facets (7) in the case of an eventual failure in the joints between any of the facets (7) and the supports (6) or other facets (7), preventing the facets (7) from abandoning the frame (1) by means of said sealing faces.

The rack additionally comprises legs (14).

## Claims

1. Rack for secure transportation of solar concentration mirror facets (7), wherein it comprises:
- a parallelepiped frame (1) composed of bars that define a lower face, an upper face and lateral faces, the frame (1) being adapted to allow insertion of the facets (7) in said frame (1) through a load face along a load direction perpendicular to said load face;
- supports (6) fixed to the face opposite the load face, which act as a butt to stop the facets in their movement through the interior of the frame (1) along the load direction;
- inner dividers (2) and outer dividers (3) disposed in the interior of the frame (1), joined to the supports (6), defining cavities (4) wherein the facets (7) are housed;
- first joining means (8) between the outer dividers (3) and any of the bars of the load face; and
- second joining means (9) between an inner divider (2) and at least another adjacent divider (2, 3).

2. Rack for secure transportation of solar concentration mirror facets (7), according to claim 1, **characterised in that** the frame is adapted for transporting facets disposed horizontally.

3. Rack for secure transportation of solar concentration mirror facets (7), according to claim 2, **characterised in that** the load face is a lateral face.

4. Rack for secure transportation of solar concentration mirror facets (7), according to claim 1, **characterised in that** the frame is adapted for transporting facets disposed vertically.

5. Rack for secure transportation of solar concentration mirror facets (7), according to claim 4, **characterised in that** the load face is the upper face.

6. Rack for secure transportation of solar concentration mirror facets (7), according to any one of the preceding claims, **characterised in that** the first joining means are angle brackets (8) adapted for being screwed to the outer dividers (3) and to any of the bars of the load face.

7. Rack for secure transportation of solar concentration mirror facets (7), according to any one of the preceding claims, **characterised in that** the second joining means are strips (9) adapted for being screwed to an inner divider (2) and to at least another adjacent divider (2, 3).

8. Rack for secure transportation of solar concentration mirror facets (7), according to any one of the preceding claims, **characterised in that** it additionally comprises sealing means (11) on two of the opposing lateral faces that prevent the mirror facets (7) from falling out through said faces.

9. Rack for secure transportation of solar concentration mirror facets (7), according to claim 8, **characterised in that** the sealing means (11) are closed profiles disposed between opposing vertices of the lateral faces where they are disposed.

10. Rack for secure transportation of solar concentration mirror facets (7), according to claim 8, **characterised in that** the sealing means (11) are closed profiles disposed between two opposing bars of the face where they are disposed.

11. Rack for secure transportation of solar concentration mirror facets (7), according to any one of the preceding claims, **characterised in that** it incorporates pads (10) made of elastic or plastic material disposed between the strips (9) or angle brackets (8) and the dividers (2, 3) for the purpose of absorbing small deformations.

12. Rack for secure transportation of solar concentration mirror facets (7), according to any one of the preceding claims, **characterised in that** it comprises two supports (6).

13. Rack for secure transportation of solar concentration mirror facets (7), according to any one of the preceding claims, **characterised in that** it incorporates legs (14).

## Patentansprüche

1. Gestell zum sicheren Transport von Spiegelfacetten zur Solarkonzentration (7), wobei dieses umfasst:
- einen quaderförmigen Rahmen (1), der aus Stangen gebildet wird, die eine untere Seite, eine obere Seite und seitliche Seiten definieren, wobei der Rahmen (1) dazu ausgelegt ist, die Einfügung von Facetten (7) in den besagten Rahmen (1) durch eine Ladeseite entlang einer Laderichtung zu erlauben, die senkrecht zur besagten Ladeseite verläuft;
- Stützen (6), die an der Seite gegenüber der Ladeseite befestigt sind, die als Anschlag dienen, um die Bewegung der Facetten durch das Innere des Rahmens (1) entlang der Laderichtung zu stoppen;
- innere Trennelemente (2) und äußere Trennelemente (3), die im Inneren des Rahmens (1) angeordnet sind, die mit den Stützen (6) verbunden sind, wobei diese Hohlräume (4) definieren, in denen die Facetten (7) aufgenommen werden;
- erste Verbindungsmittel (8) zwischen den äußeren Trennelementen (3) und einer der Stangen der Ladeseite; und
- zweite Verbindungsmittel (9) zwischen einem inneren Trennelement (2) und mindestens einem anderen angrenzenden Trennelement (2, 3).

2. Gestell zum sicheren Transport von Spiegelfacetten zur Solarkonzentration (7) nach Anspruch 1, **dadurch gekennzeichnet, dass** der Rahmen dazu ausgelegt ist, horizontal angeordnete Facetten zu transportieren.

3. Gestell zum sicheren Transport von Spiegelfacetten zur Solarkonzentration (7) nach Anspruch 2, **dadurch gekennzeichnet, dass** die Ladeseite eine seitliche Seite ist.

4. Gestell zum sicheren Transport von Spiegelfacetten zur Solarkonzentration (7) nach Anspruch 1, **dadurch gekennzeichnet, dass** der Rahmen dazu ausgelegt ist, vertikal angeordnete Facetten zu transportieren.

5. Gestell zum sicheren Transport von Spiegelfacetten zur Solarkonzentration (7) nach Anspruch 4, **dadurch gekennzeichnet, dass** die Ladeseite die obere Seite ist.

6. Gestell zum sicheren Transport von Spiegelfacetten zur Solarkonzentration (7) nach irgendeinem der vorstehenden Ansprüche, **dadurch gekennzeichnet, dass** die ersten Verbindungsmittel Befestigungswinkel (8) sind, die dazu ausgelegt sind, an die äußeren Trennelemente (3) und an irgendeine der Stangen der Ladeseite geschraubt zu werden.

7. Gestell zum sicheren Transport von Spiegelfacetten zur Solarkonzentration (7) nach irgendeinem der vorstehenden Ansprüche, **dadurch gekennzeichnet, dass** die zweiten Verbindungsmittel Streifen (9) sind, die dazu ausgelegt sind, an ein inneres Trennelement (2) und an mindestens ein anderes angrenzendes Trennelement (2, 3) geschraubt zu werden.

8. Gestell zum sicheren Transport von Spiegelfacetten zur Solarkonzentration (7) nach irgendeinem der vorstehenden Ansprüche, **dadurch gekennzeichnet, dass** dieses zusätzliche Versiegelungsmittel (11) auf zwei der gegenüberliegenden seitlichen Seiten umfasst, die verhindern, dass die Spiegelfacetten (7) durch die besagten Seiten herausfallen.

9. Gestell zum sicheren Transport von Spiegelfacetten zur Solarkonzentration (7) nach Anspruch 8, **dadurch gekennzeichnet, dass** die Versiegelungsmittel (11) geschlossene Profile sind, die zwischen gegenüberliegenden Eckpunkten der seitlichen Seiten angeordnet sind, an denen sie angeordnet sind.

10. Gestell zum sicheren Transport von Spiegelfacetten zur Solarkonzentration (7) nach Anspruch 8, **dadurch gekennzeichnet, dass** die Versiegelungsmittel (11) geschlossene Profile sind, die zwischen zwei gegenüberliegenden Stangen der Seite angeordnet sind, an der sie angeordnet sind.

11. Gestell zum sicheren Transport von Spiegelfacetten zur Solarkonzentration (7) nach irgendeinem der vorstehenden Ansprüche, **dadurch gekennzeichnet, dass** dieses Polster (10) aus einem elastischen oder Kunststoffmaterial einschließt, die zwischen den Streifen (9) oder den Befestigungswinkeln (8) und den Trennelementen (2, 3) angeordnet sind, um kleine Verformungen zu absorbieren.

12. Gestell zum sicheren Transport von Spiegelfacetten zur Solarkonzentration (7) nach irgendeinem der vorstehenden Ansprüche, **dadurch gekennzeichnet, dass** dieses zwei Stützen (6) umfasst.

13. Gestell zum sicheren Transport von Spiegelfacetten zur Solarkonzentration (7) nach irgendeinem der vorstehenden Ansprüche, **dadurch gekennzeichnet, dass** dieses Beine (14) umfasst.

## Revendications

1. Portoir pour le transport sécurisé de facettes de miroir à concentration solaire (7), dans lequel sont compris :
- un cadre parallélépipédique (1) composé de barres qui définissent une face inférieure, une face supérieure et des faces latérales, le cadre (1) étant adapté pour permettre l'insertion des facettes (7) dans ledit cadre (1) à travers une face de chargement dans un sens de chargement perpendiculaire à ladite face de chargement ;
- des supports (6) fixés à la face opposée à la face de chargement, qui servent de butoir pour arrêter les facettes dans leur mouvement à l'intérieur du cadre (1) dans le sens de chargement ;
- des séparateurs internes (2) et des séparateurs externes (3) disposés à l'intérieur du cadre (1), assemblés aux supports (6), définissant des cavités (4) dans lesquelles sont logées les facettes (7) ;
- des premiers moyens d'assemblage (8) entre les séparateurs externes (3) et n'importe laquelle des barres de la face de chargement ; et
- des seconds moyens d'assemblage (9) entre un séparateur interne (2) et au moins un autre séparateur adjacent (2, 3).

2. Portoir pour le transport sécurisé de facettes de miroir à concentration solaire (7), selon la revendication 1, **caractérisé en ce que** le cadre est adapté au transport de facettes disposées horizontalement.

3. Portoir pour le transport sécurisé de facettes de miroir à concentration solaire (7), selon la revendication 2, **caractérisé en ce que** la face de chargement est une face latérale.

4. Portoir pour le transport sécurisé de facettes de miroir à concentration solaire (7), selon la revendication 1, **caractérisé en ce que** le cadre est adapté au transport de facettes disposées verticalement.

5. Portoir pour le transport sécurisé de facettes de miroir à concentration solaire (7), selon la revendication 4, **caractérisé en ce que** la face de chargement est la face supérieure.

6. Portoir pour le transport sécurisé de facettes de miroir à concentration solaire (7), selon n'importe laquelle des revendications précédentes, **caractérisé en ce que** les premiers moyens d'assemblage sont des équerres (8) adaptées pour être vissées aux séparateurs externes (3) et à n'importe laquelle des barres de la face de chargement.

7. Portoir pour le transport sécurisé de facettes de miroir à concentration solaire (7), selon n'importe laquelle des revendications précédentes, **caractérisé en ce que** les seconds moyens d'assemblage sont des bandes (9) adaptées pour être vissées à un séparateur interne (2) et à au moins un autre séparateur adjacent (2, 3).

8. Portoir pour le transport sécurisé de facettes de miroir à concentration solaire (7), selon n'importe laquelle des revendications précédentes, **caractérisé en ce qu'**il comprend en outre des moyens de blocage (11) sur deux des faces latérales opposées qui empêchent les facettes de miroir (7) de tomber à travers lesdites faces.

9. Portoir pour le transport sécurisé de facettes de miroir à concentration solaire (7), selon la revendication 8, **caractérisé en ce que** les moyens de blocage (11) sont des profilés fermés disposés entre des sommets opposés des faces latérales où ils sont disposés.

10. Portoir pour le transport sécurisé de facettes de miroir à concentration solaire (7), selon la revendication 8, **caractérisé en ce que** les moyens de blocage (11) sont des profilés fermés disposés entre deux barres opposées de la face où ils sont disposés.

11. Portoir pour le transport sécurisé de facettes de miroir à concentration solaire (7), selon n'importe laquelle des revendications précédentes, **caractérisé en ce qu'**il comprend des tampons (10) fabriqués en matériau élastique ou plastique disposés entre les lames (9) ou équerres (8) et les séparateurs (2, 3) afin qu'ils absorbent de petites déformations.

12. Portoir pour le transport sécurisé de facettes de miroir à concentration solaire (7), selon n'importe laquelle des revendications précédentes, **caractérisé en ce qu'**il comprend deux supports (6).

13. Portoir pour le transport sécurisé de facettes de miroir à concentration solaire (7), selon n'importe laquelle des revendications précédentes, **caractérisé en ce qu'**il comporte des pieds (14).
